(19) Europäisches Patentamt

European Patent Office

Office européen des brevets

(11) **EP 1 488 658 B1**

(12) **EUROPEAN PATENT SPECIFICATION**

(45) Date of publication and mention
of the grant of the patent:
**01.08.2007 Bulletin 2007/31**

(51) Int Cl.:
***H04Q 7/38*** *(2006.01)*     ***H04Q 7/22*** *(2006.01)*

(21) Application number: **03742612.9**

(22) Date of filing: **25.02.2003**

(86) International application number:
**PCT/GB2003/000799**

(87) International publication number:
**WO 2003/071825 (28.08.2003 Gazette 2003/35)**

(54) **GEOGRAPHICAL LOCATION INFORMATION EXCHANGE BETWEEN TERMINALS**

AUSTAUSCH VON GEOGRAPHISCHEN STANDORTINFORMATIONEN ZWISCHEN
ENDGERÄTEN

ECHANGE D'INFORMATIONS DE POSITION GEOGRAPHIQUE ENTRE DES TERMINAUX

(84) Designated Contracting States:
**AT BE BG CH CY CZ DE DK EE ES FI FR GB GR
HU IE IT LI LU MC NL PT SE SI SK TR**

(30) Priority: **25.02.2002 GB 0204341**

(43) Date of publication of application:
**22.12.2004 Bulletin 2004/52**

(73) Proprietor: **Spaargaren, Jerome
London SE1 8EN (GB)**

(72) Inventor: **Spaargaren, Jerome
London SE1 8EN (GB)**

(74) Representative: **Spaargaren, Jerome et al
Electronic Intellectual Property,
Fairfax House
15 Fulwood Place
London WC1V 6HU (GB)**

(56) References cited:
**WO-A-01/60100**     **WO-A-01/74034**
**WO-A-01/95505**     **US-B1- 6 185 426**

• **PATENT ABSTRACTS OF JAPAN vol. 1996, no.
12, 26 December 1996 (1996-12-26) & JP 08 212497
A (AQUEOUS RES:KK), 20 August 1996
(1996-08-20)**

**Description**

<u>Field of the Present Invention</u>

The present invention relates to the management and use of geographical location data in data processing devices, in particular but not exclusively wireless telecommunications devices, and the dissemination of geographical location data and the provision of geographical location-based services in data communications networks.

<u>Background</u>

The Global Positioning System (GPS) uses satellite signals to allow receivers to obtain their geographical location coordinates. Mobile phones with in-built GPS receivers are known. Garmin's NavTalk™ product, for example, combines an analog cellular phone conforming to the Advanced Mobile Phone Service (AMPS) with a GPS receiver. It is able to transmit the terminal's current location as location coordinate data over the cellular network to other Navtalk™ devices in a data format using Dual Tone Multiple Frequency (DTMF) codes. The Benefon Esc!™ and Track™ handsets are phones conforming to the Global System for Mobile Communications (GSM) which are able to transmit their current location measured using an in-built GPS receiver using the Short Message Service (SMS) in the format of the Mobile Phone Telematics Protocol (MPTP). The Benefon system is described in International Patent Application WO 01/60100. Both the Navtalk™ and Benefon handsets display the location of the sending terminal on a map stored in the memory of the recipient terminal. A problem with both of these types of devices is that they require a matching device, employing the same data format for location information transmission, for message receipt at the recipient terminal in order to allow the recipient terminal to access the location information. Current standard mobile terminals, which are not location-enabled in such a manner, cannot utilise such location information.

Information relating to the current location of a mobile phone may be provided by a wireless network to the subscriber or to third parties. Location coordinate data concerning a mobile phone is held in a location server for location of the subscriber by emergency services. Access to current location information for a mobile phone can also be made available to third parties, such as content providers, from the location server. Access to the information is controlled according to subscription profiles.

One known service which is enabled by use of a location server is a "friend finder" service, whereby a person entitled to know the whereabouts of the subscriber can access map data showing the subscriber's location, for example via a Web browser. However, this requires the receiving party to be registered as entitled to receive the information and a secure access procedure.

The Location Inter-Operability Forum (LIF) Mobile Location Protocol (MLP) specification defines a secure access method allowing Internet applications to query location information from a location server. In the LIF Mobile Location Protocol, location information is carried in a mark-up language format, namely an Extensible Mark-Up Language (XML) document. A request for location information is sent by a Location Services (LCS) client, which is typically a location-based content server, to a location server. The request can include an element specifying variables, such as the coordinate system (e.g. the Universal Transverse Mercator (UTM) coordinate system or Latitude/Longitude) that should be used in the position answer. The location information can be provided in an immediate reply, as an event-triggered reply, or periodically for continuous tracking purposes.

It is an object of the invention to provide improvements in relation to user terminals and systems capable of processing geographic location information.

<u>Summary of the Invention</u>

Aspects of the invention are set out in the appended claims.

Embodiments of the invention provide "location-enabled" user terminals with the capability to provide advanced features and functions relating to the processing of geographic location data, whilst enabling the communication of location information from such user terminals to both similarly location-enabled user terminals and to "non-location-enabled" user terminals. The location information may be accompanied by a textual or other type of message element generated in the sending user terminal.

The receiving party may be identified in the messages by a recipient identifier in the form of a Mobile Subscriber International Directory Number (MSISDN), an e-mail address, etc.

By use of the present invention, it becomes unnecessary to manage and update large amounts of location information content on a user terminal for transmission to another user terminal in a suitable format. Instead, a relatively simple location information format may be used to transmit the location information, along with the recipient identifier, to a network node which is arranged to manage the location information content on the behalf of the sending party. On the other hand, a list of recipient identifiers may be managed on the sender's user terminal itself, which is helpful in maintaining convenience of use and privacy, since these functions can be integrated with other functions provided on a user terminal. The basic location information (such as coordinate data) and may be managed either on the sender's user terminal itself, or in a network node.

Furthermore, by specifically processing location information in a network element, the transmission of location messages between user terminals may be controlled on a subscription basis, or special charging schemes can be applied, which is not the case when, as in the prior art, messages are sent in conventional message formats between user terminals without intermediate processing of the message contents.

In preferred embodiments of the invention, an originating mobile terminal construct location messages by presenting the user with terminal functions provided by a location-enabled application running on the mobile terminal. The location messaging functionality can be closely tied to conventional messaging techniques, such as SMS messaging and Multimedia Messaging Service (MMS) messaging, which are also run on the user terminal. Hence, the convenience to the user is increased.

Embodiments of the invention include functionality allowing items of location data, in particular but not exclusively location coordinate data, to be readily disseminated and used in manners convenient to users of devices and systems arranged in accordance with the invention. Use of location coordinate data allows locations to be specified and recognised in a unique and reliable manner, whilst such data can be used to specify and recognise a location on substantially any point of the earth's surface or even locations remote from the earth's surface.

Further features and advantages of the present invention will become apparent from the following description, given by way of example only, of embodiments of the present invention, made with reference to the accompanying drawings.

Description of the Drawings

Figure 1 is a schematic illustration of a data processing systems arranged in accordance with embodiments of the present invention;
Figure 2 is a schematic diagram of elements of a user terminal arranged in accordance with embodiments of the present invention;
Figure 3 illustrates location information stored used in embodiments of the invention;
Figures 4 and 5 illustrate terminal-originated and network-originated message formats respectively;
Figures 6 to 11 illustrate features of a graphical user interface provided by a cellular telephone terminal arranged in accordance with embodiments of the present invention.

Detailed Description of Preferred Embodiments

Network Access Arrangements

In embodiments of the present invention, users may make use of location and associated data with both location-enabled user terminals, arranged to recognise, process and manage location coordinate data and non-location-enabled user terminals which do not have the same capability to recognise location coordinate data as such. The user terminals may be data processing devices of any of various types, such as fixed PCs, notebooks or laptop computers, handheld computers, PDAs, fixed telephones, cellular phones, in-car navigation systems, broadcast/cable/satellite televisions, etc. location-enabled user terminals may store location information and associated data in a local data store and utilise geographical location and associated data by means of terminal-side applications as will be described in detail below.

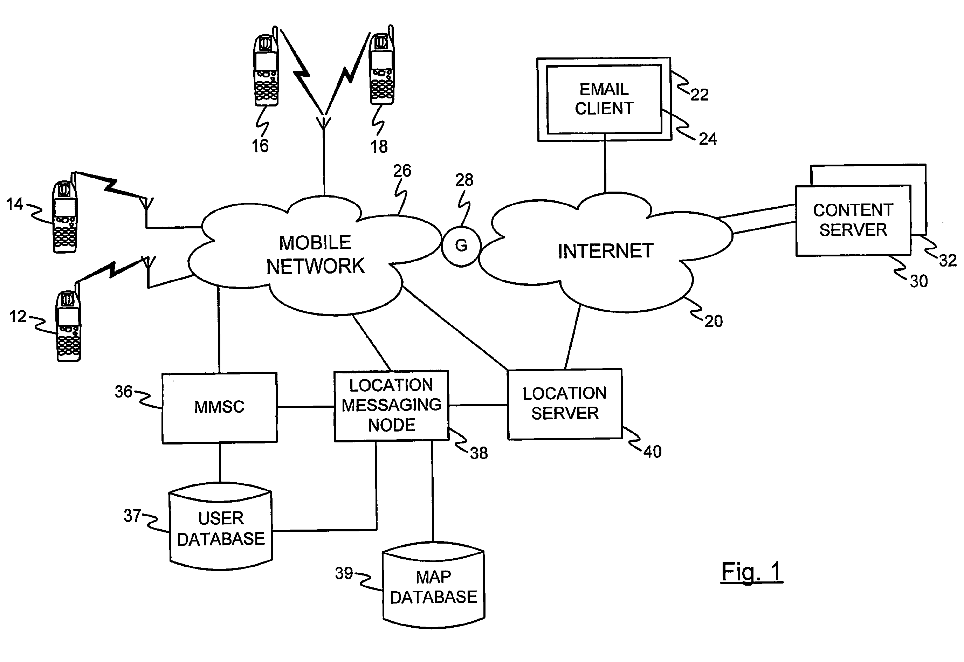

Figure 1 schematically illustrates possible arrangements of user terminals with network access to various service resources and other user terminals. Five exemplary user terminals are shown - four mobile terminals and one fixed terminal. A first mobile terminal 12 is able to determine its geographical location coordinates with an internal or co-located positioning module such as a GPS receiver. A second mobile terminal 14 has no internal or co-located positioning module but relies on a network-based positioning method. Both the first and second mobile terminals are location-enabled user terminals having a local application capable of recognising and processing location coordinate data received in a message from the mobile network. Third and fourth mobile terminals 16, 18 are non-location-enabled user terminals having no such application. Each of the first, second and third mobile terminals 12, 14 and 16 is capable of sending, receiving and processing Multimedia Messaging Service (MMS) messages, as described in the 3GPP Technical Specifications 22.140 (v4.1.0) and 23.140 (v4.2.0) entitled "Multimedia Messaging Service" Stages 1 and 2, of which the contents are incorporated herein by reference. Fourth mobile terminal 18 is a legacy GSM user terminal capable of searching, receiving and processing Short Message Service (SMS) messages but not MMS messages. Mobile terminals 12, 14, 16 and 18 are connected to the Internet through mobile network 26 and a gateway 28. Mobile network 26 may be any cellular network such as a GSM or UMTS network. Mobile terminals 12, 14, 16, 18 may be in the form of hand-held devices, or other devices carried by a user. Alternatively, one or more of mobile terminals 12, 14, 16, 18 may form part of an on-board vehicle navigational system.

Fixed line terminal 22 is connected to the Internet 20, for example by means of a dial-up connection, and includes an e-mail client application 24 and a Web browser application (not shown).

Many methods of geographically locating mobile devices are known and have varying levels of accuracy. For example, cellular mobile networks maintain a record of the current cell in which a mobile terminal is located, although cells can often be several square miles in area. Location can be determined more accurately using other well-known methods. One such method is to use a global positioning system (GPS) transceiver at the mobile device. Variants thereof include the Assisted GPS (A-GPS) method in which GPS location determination on the handset is aided by assistance data sent by the network. Other methods are to use measurements such as signal strength or timing advance in respect of communications between the mobile device and three (or more) base stations (BTSs) of the mobile network to triangulate the position of the mobile device. The location calculation may be performed either at the mobile station itself or at a node of the network. The location of a mobile device may be determined in three-dimensional as well as two-dimensional coordinates and accuracy levels are estimated to be as good as within 5 or 10 metres in horizontal and vertical axes. Location information may also be obtained from a short-range radio beacon such as a Bluetooth™ server. Any one or more of these various methods may be used in embodiments of the invention. After a location determination episode, the current location of the terminal is stored as location coordinate data in a location server 40.

Location-based services may be obtained from Internet content servers 30 and 32. Each of the respective service entities is capable of processing the location coordinate data associated with a request by a user terminal and proving a location-based service response.

User terminals 12, 14, 16, 18 and 22 may access location-based content and services available at servers 30 and 32 by using suitable hypermedia browser terminal applications which send queries to network resources available on content servers 30 and 32. For example, servers 30 and 32 may be Web or WAP servers and user terminals 12, 14, 16, 18 and 22 may run Web browser or WAP micro-browser terminal application programs. A terminal request may be sent for example in a Hypertext Transfer Protocol (HTTP) or WAP Session Protocol (WSP) request message containing location information. In the case of the location-enabled user terminals 12, 14 location coordinate data in the request may be transmitted by the browser application in a location transfer protocol format, such as the LIF Mobile Location Protocol as described in LIF TS 101 v2.0.0, Location Inter-Operability Forum 2001, the contents of which are incorporated herein by reference. In the case of the non-location-enabled user terminals 16, 18, 20, the location data may be passed to the browser application in a non-location specific format, such as in the form of a Uniform Resource Locator (URL) containing location coordinate data, as described in further detail below, or by manual entry of form data. The server may then respond by transmitting a Web page or WAP card or deck containing information tailored to the location specified in the terminal request.

The mobile network 26 is also provided with a Multimedia Message Service Centre (MMSC) capable of receiving, storing and relaying MMS messages from and to mobile terminals, using mobile subscriber international directory numbers (MSISDNs) as originator and recipient identifiers, and to e-mail clients, such as e-mail client 24, using e-mail addresses as recipient identifiers. A user database 37 stores user profiles detailing, amongst other information, terminal capabilities for subscribers to the network.

Also included, in accordance with various embodiments of the invention, is a location messaging node 38, capable of processing location coordinate data in mobile-originating messages received via the MMSC 36, and for generating network-originating messages containing location information adapted for the recipient terminals, which messages are also transmitted via the MMSC 36.

In the case of location-enabled mobile terminals 12, 14, a mobile terminal is capable of adding location information to a message originated at the mobile terminal, referred to herein as a mobile-originated location message. The message is sent to the location messaging node 38 which processes the data received from the mobile terminal, generates the location information in a location information format appropriate to the receiving terminal and transmits the location information to the receiving terminal, in what is referred to herein as a network-originated location message. In the case where the mobile originating message does not itself hold the location information to be processed, the location messaging node can retrieve current location information for the originating mobile terminal from the location server 40. A map database 39 is used for producing location information in a map image format.

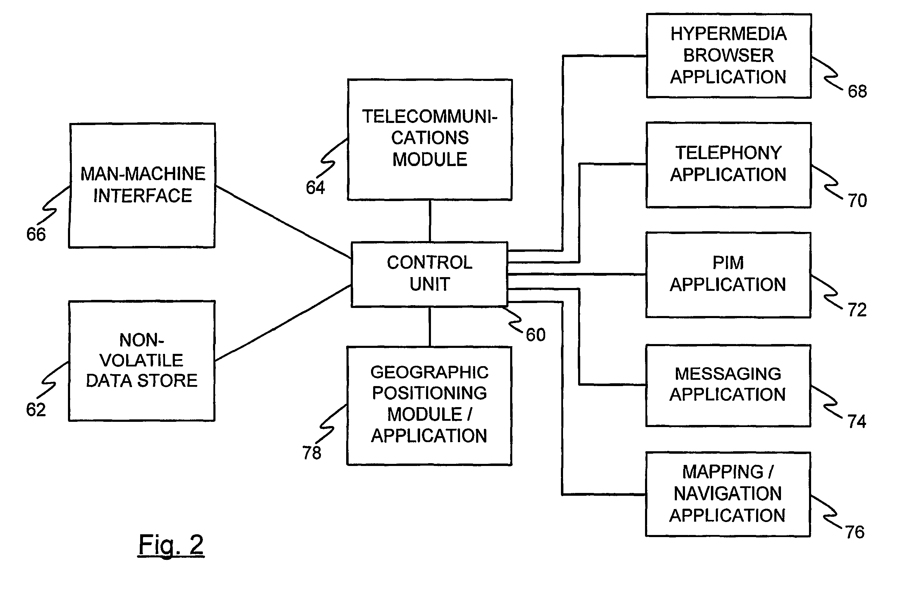

Components of an exemplary user terminal are schematically illustrated in Figure 2. The terminal comprises a control unit 60 coupled to one or more non-volatile data stores, for example flash memory, at least one telecommunications module 64 (in the case of a mobile terminal a radio module for communication with radio base stations in cellular networks), and one or more man-machine interface components 66 (such as a screen or touch screen, a speaker, a keypad, a microphone, a camera). One or more terminal application programs 68-76, are stored in memory on the terminal, either as part of the terminal's operating system or as separate programs. The terminal applications comprise one or more of a hypermedia browser application 68, a telephony application 70, a Personal Information Manager (PIM) application 72, a messaging application 74 and/or a mapping/navigation application 76. The terminal also includes a geographic positioning module and application 78, such as a GPS receiver. Each of these types of application is generally well-known and will not be described in detail herein. The applications present information and receive instructions from the user via the man-machine interface 66. Information concerning the status and functions available to the user are presented on the screen (for example, menu options) or through the speaker (for example, ringing tones or keypad presses). Instructions from the user may be given via the touchscreen, keypad or microphone (i.e. voice commands). Based on the instructions received, the terminal may perform internal processes, such as changing the data or settings stored in memory 62, or it may transmit data to and/or receive data from a remote data processing device via the telecommunications module. The remote data processing device may be a service processing node or a terminal device such as a mobile telephone or a fixed telephone.

In a preferred embodiment each of the user terminals 12, 14, 16, 18 includes an arrangement of components as illustrated in Figure 2; however the non-location-enabled user terminals 16, 18 lack the mapping/navigation application 76 and the geographic positioning module/application 78.

Geographical Location Information

According to the present invention, geographical location information, and associated data, may be used by data processing devices to perform location-based functions or provide location-based services or content. The data processing devices may be user terminal devices used by users or network elements such as automated servers, for example. These data processing devices will store location and associated data and communicate location and associated data with other data processing devices.

A geographical location may be represented in the form of data in many ways. In relation to various embodiments of the invention to be described in further detail below, the term "geographical location information" is intended to represent, without limitation, one or more of 1) location coordinate data; 2) well-known geographical names or codes, such as a country name or codes (e.g., "US", "GB", etc.), metropolitan and/or country region names (e.g. "Paris, France"), street names, etc; 3) postal codes generated by known naming conventions, like post codes or zip codes; 4) any other type of unique or systematically arranged geographical location identifiers; 5) map image data; 6) navigational and direction information.

Herein, the term "location coordinate data" is intended to mean location information which uses a position reference system and is represented in a form in which location information is specified by at least two coordinates which, together with an appropriate reference system such as zone or datum data, specify a geographical position or area. Location coordinate data is preferably constructed using a global location reference standard, i.e. a standard whereby substantially any location on the surface of the earth may be specified to a selected degree of accuracy. Three-dimensional geographical locations may be represented by combining a two-dimensional data representation and a representation of altitude or height above sea level data (expressed in a standard distance unit such as metres). Location coordinate data may include, without limitation, one or more of 1) latitude and longitude co-ordinates; 2) polar or geodetic coordinates; 3) grid references 4) grid zone references; 5) Universal Transverse Mercator (UTM) references.

In one embodiment of the present invention, location coordinate data is represented by data in the form of a predetermined modification of conventional latitude and longitude co-ordinates, represented in decimal degree format. In this modification, the coordinates are optimised for representation by as few as possible numerical digits (0-9) only (i.e. without negative values and without decimal points), whilst maintaining global uniqueness and a desired amount of accuracy. In an alternative embodiment, a shorter code is produced by using a larger range of alphanumeric characters. The coordinates are preferably normalised and incremented by a predetermined amount. Conventional latitude ranges from -90.0000... to +90.0000, whilst conventional longitude ranges from -180.0000... to +180.0000. For example, the following conversion from conventional latitude (Lat) and longitude (Long) to a modified decimal format (Lat+, Long+) is used:

$$\text{Lat+} = (\text{Lat}+90)/180; \text{ the "0." is omitted.}$$

$$\text{Long+} = (\text{Long}+180)/360; \text{ the "0." is omitted.}$$

Such a representation thus provides globally-unique codes which identify geographical locations to a desired degree of accuracy by single character strings only.

Using multiple sets of coordinates, optionally together with a single or a corresponding multiple set of horizontal range radii (and, optionally, a single or corresponding multiple set of altitude and vertical range radii) it is possible to define more complex geographic regions. Combinations of point-defining data, range-defining data, or region defining data may be used in the present invention to define simple or complex regions which may be sent in location information transmitted from and to user terminals.

Location coordinate data in preferred embodiments of the invention is specified to a certain level of accuracy. For example, location data provided by location servers of cellular networks will have a specified accuracy depending on the requested quality of service level and the capabilities of the network at that particular location and time. Similarly, location data obtained from a user by pointing to a map will depend on the scale of the map, and the resolution and accuracy of the pointing device. Thus, accuracy data may be associated with location data. The type of accuracy data will depend on the type of data used to represent geographical location. For longitude, latitude and altitude data, a horizontal and vertical error may be specified.

Storage of Location Coordinate Data in User Terminals

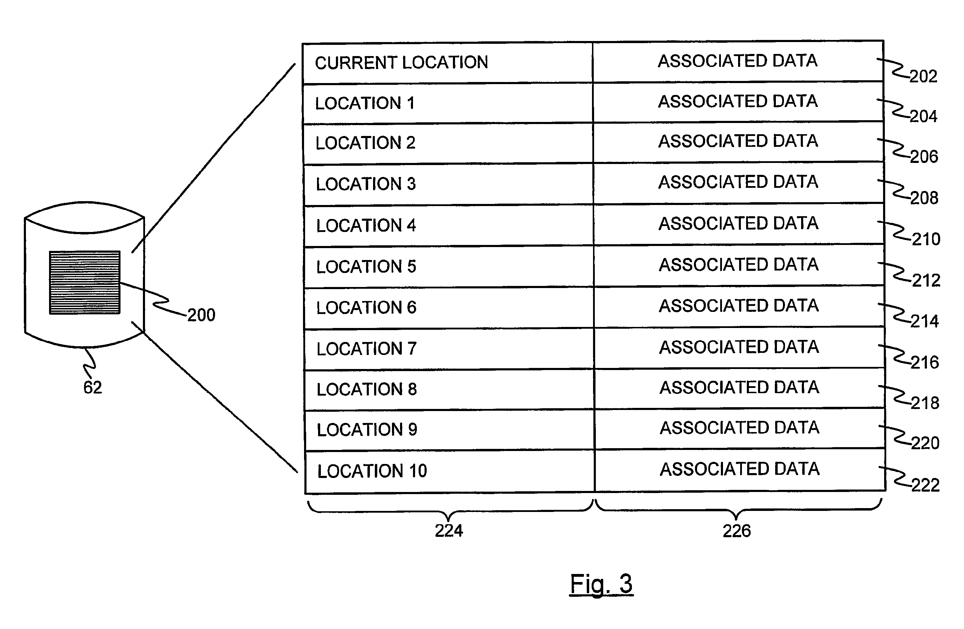

In accordance with embodiments of the invention, location coordinate data is stored in, or in a local device accessible by, the location-enabled user terminals 12, 14, preferably in an in-built non-volatile memory 62 as described. Memory 62 includes a location storage directory 200 storing geographical data in the form of a plurality of location storage records 202-222, as illustrated in Figure 3. One location storage record holds location coordinate data 224 representing a single location in the form of one or more fields of location coordinate data, and one or more associated fields of data 226. Current location record 222 holds current, or at least most-recently obtained, location information for the terminal. A plurality of other location records 204-222 hold previously-stored location information, which may include saved previous current location information for the terminal and/or location information received from other sources, such as other terminals and content servers.

Location-related Associated Data

Other data specifically related to a location may be stored in an associated manner with the location data and included in messages sent from a terminal. For example, a user-allotted name, such as "London" or "My office" or "Sarah's house" or "Fred" may be input by a user and stored in a location record when a location is first saved using a menu function on the mobile terminal. Further associated data may also be stored in the location storage records, such as: postal address components such as one or more of a street number, street name, town or city name, post or zip code and country name); an e-mail address; a telephone directory number; a Web site address; a location type to indicate the type of location.

Communication of Geographical Location Information

In various different embodiments of the invention, mobile-originated location messages are transmitted by location-enabled mobile terminals, or even non-location-enabled mobile terminals, to allow the location messaging node 38 to receive a recipient identifier, in the form of an MSISDN or an e-mail address, and selected location information. The location messaging node processes the location information and generates a network-originated location message containing location information in a format appropriate to the receiving terminal.

The messages used in different embodiments of the invention are "store-and-forward" type messages, namely messages such as SMS messages, MMS messages and e-mail messages which are capable of being held in a network store after transmission, to await download to the recipient on receipt of a trigger, such as a message indicating the terminal being switched on or a download request from the recipient terminal.

In each of the embodiments in which a location-enabled mobile terminal transmits a message intended to enable the communication of geographical location information to an intended recipient, the mobile terminal is adapted, using appropriate computer software, to present menu functions whereby firstly, the function of transmitting a location message is selected, and secondly, the identity of the recipient is specified and optionally, where location coordinate data is stored in the user terminal, one, two or more items of location coordinate data may be selected, for example from a list, to be transmitted in a location messaging request. The recipient identity is preferably selectable from an integrated contacts directory which is accessible by other applications, such as the PIM application 72 on the mobile terminal, and also by the conventional messaging application(s) on the mobile terminal, such as an MMS client application and an SMS client application. Accordingly, the user interface for transmitting location messages becomes intuitive to the user and conveniently interoperates with the other features of the mobile terminal.

Mobile-Originated Location Message Formats

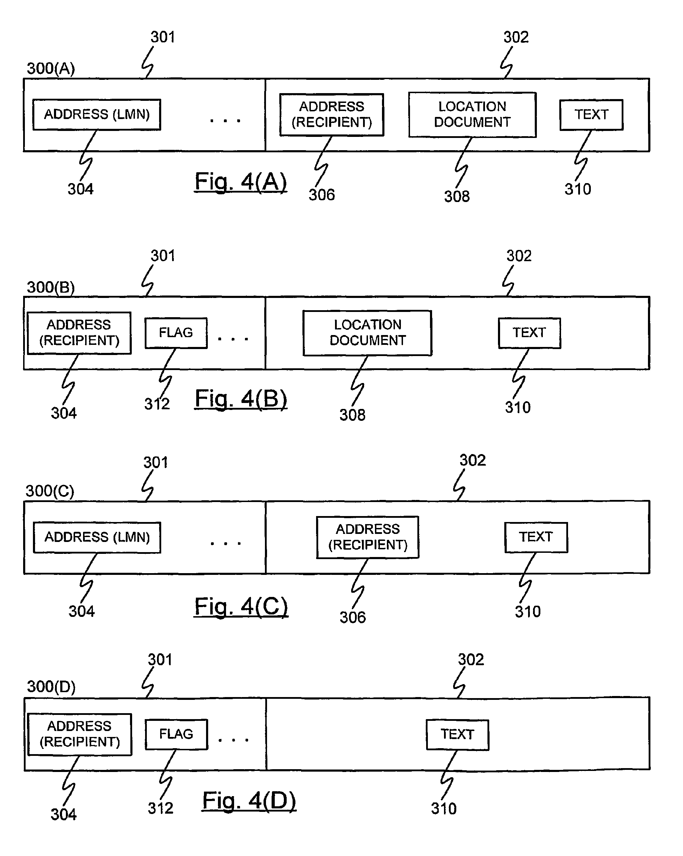

A mobile-originated location message may take various formats, depending on the manner in which the mobile terminal interoperates with the location messaging node 38. Figures 4(A) to 4(D) illustrate mobile-originated message formats in accordance with different embodiments of the invention.

Figures 4(A) and 4(B) show message formats containing location information for processing by the location messaging node 38. Each of these formats includes a location document containing location coordinate data for processing by the location messaging node as appropriate. In preferred embodiments of the present invention the location document is an XML document containing a set of tagged elements included tagged location coordinate data for processing by the location messaging node. Examples of suitable location document formats are given in the LIF mobile location protocol, which formats are incorporated herein specifically by reference.

In a first embodiment, as shown in Figure 4(A), the location message is specifically addressed to the location messaging node 38. As shown in Figure 4(A), the location message 300(A), in the form of an MMS message, includes a header portion 301 and a body portion 302. In this embodiment, the header portion 301 includes a destination address data element 304 in the form of the address of the location messaging node 38. The body portion 302 of the message, meanwhile, contains a further address data element 306, specifying the address of the recipient terminal. The address of the location messaging node 38 is pre-stored in the transmitting user terminal 12, 14, and added to the destination address field 304 of the message automatically by the user terminal. The recipient address, meanwhile, on selection by the user, is added to the body portion 302 of the message in accordance with a predetermined message format, so that the recipient address may be retrieved by the location messaging node from the message body 302. The message body 302 also includes a location document data element 308, and a text data element 310. On transmission of the location message shown in Figure 4(A), the message is processed initially by the MMSC 36, which forwards the message, without processing the contents of the message body 302, to the location messaging node 38. Accordingly, in this embodiment, the MMSC need not have any customisation for the location messaging function. The location messaging function can be provided by the addition of the location messaging node 38 in the mobile network 26.

Figure 4(B) shows a second embodiment of mobile-originated location message format. In this embodiment, the body portion 301 of a location message 300(B) contains the recipient address in the destination address data element 304, and also includes a custom data element 312 containing a flag indicating that the message is to be passed to the location messaging node 38 for processing, rather than being forwarded directly to the recipient. In this case, the message body 302 includes the location document element 308 and a text element 310.

Figure 4(C) shows a third embodiment of mobile-originated location message format. In this embodiment, the header 301 of a location message 300(C) contains the address of the location messaging node 38 in the destination address element 304, and it holds the recipient address data element 306 and the text data element 310 in the message body 302. In this case, the location message is received and processed normally by the MMSC 36, and transmitted onwards to the location messaging node 38 for processing.

Note that the message format shown in Figure 4(C) may be generated both in a location-enabled terminal, using mentioned functions provided on the mobile terminal, or in a non-location-enabled terminal, by the user, choosing to address a conventional MMS message to the location messaging node 38, and by the user inputting the recipient address in a predetermined format, for example by plain text at the start, in text, followed by a message text part thereafter. In this embodiment, the location messaging node 38, on receipt of the location message, retrieves the originating terminal address, from the originating address part of the message header, from the message and transmits a location information request to location server 40. The request/response format may take the form of those specified in the LIF Mobile Location Protocol. In response, location server 40 returns a location document containing current location information for the originating mobile terminal, wherefrom the location information transmitted to the recipient terminal is generated.

Figure 4(D) shows a mobile-originated location message format processed by the location messaging node 38 similar to that shown in Figure 4(C). In this embodiment, however, instead of being addressed to the location messaging node 38, a location message 300(D) contains a custom data element 312 in the form of a flag indicating to the MMSC 36 that the message should be transferred to location messaging node 38 for processing.

Network-Originated Location Message Formats

On receipt of a mobile-originated location message, the location messaging node 38 extracts the recipient address data from the message, and generates a suitable location message. In a preferred embodiment, the location messaging node determines a terminal capability for which an appropriate location information format is to be produced. One mode of distinguishing different terminal capabilities is from the type of recipient identifier. Namely, if the recipient identifier is an e-mail message, a location information format specifically adapted for use by a Web browser is generated, whereas if the recipient identifier is an MSISDN, a mobile terminal specific format, such as one specifically for use by a WAP micro-browser, is generated. An alternative, or additional, mode of determining a terminal capability for which an appropriate location information format is to be generated is by look up in the user database 37 in the case of the recipient identifier being an MSISDN. Using the MSISDN, the appropriate user record held in user database 37 is accessed, whereby a type and/or capability of mobile terminal utilised by the user is retrieved. From this determined type or capability, an appropriate location information format is selected.

The user database 37 preferably includes data indicating, on a per-user basis, whether or not the recipient terminal is location-enabled. If a terminal is location-enabled the information is preferably transmitted in a format containing location coordinate data, such as the location document format detailed below, so that the location coordinate data may be used by applications on the mobile terminal, saved on the mobile terminal, and further distributed to other user terminals thereafter as desired. If, on the other hand the recipient terminal is non-location-enabled, a format not requiring specific location coordinate data processing capabilities on the location terminal is selected. In the case of a recipient terminal, such as MMS-enabled mobile terminal 16, having appropriate image messaging capabilities, the location information format chosen may include a map image. In the case of a limited capability recipient terminal, such as SMS-enabled mobile terminal 18, the location information format selected may be an exclusively textual format, such as the URL format to be described in further detail below, or turn-by-turn directions, which may be sent in successive messages.

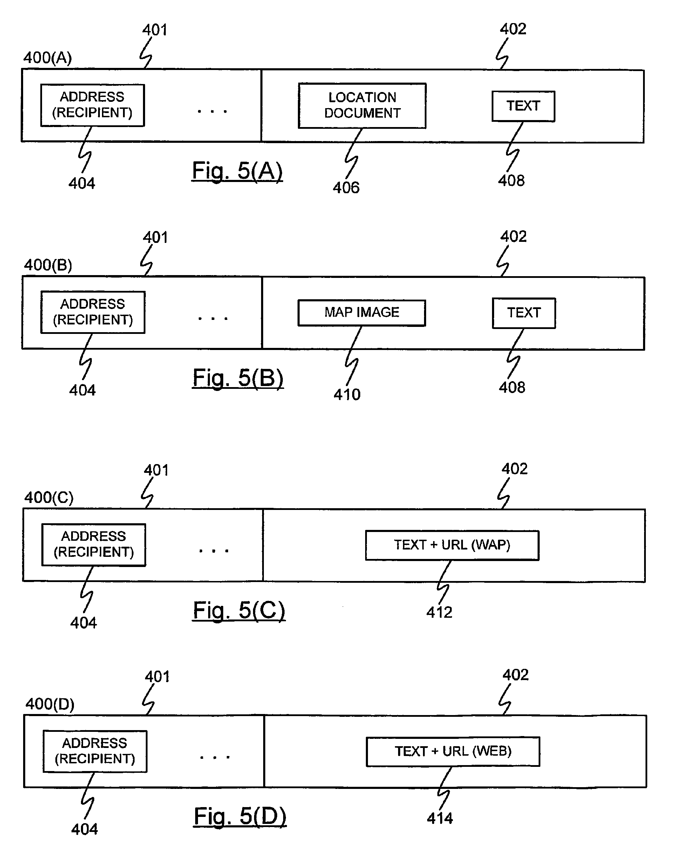

Four examples of location information formats which may be sent in network-originated location messages from the location messaging node 38 are illustrated in Figures 5(A) to Figures 5(D).

Location Information - Format 1: Location Document Format

At least one predetermined location information format is used in location messages in order to transmit location coordinate data in a message to a location-enabled terminal. In preferred embodiments of the present invention the format is that of an XML document containing a set of tagged elements including tagged location coordinate data for processing by the receiving terminal. Examples of suitable location document format is given in the LIF Mobile Location Protocol, which formats are incorporated herein specifically by reference. Generally, a location document received during message processing may be copied into the outgoing message if the location document format is selected for the receiving terminal.

As shown in Figure 5(A), the location document 406 may be added to the body 402 of the outgoing location message 400(A), which also contains text 408 corresponding to that received in the mobile-originating location message. The recipient address is included as the destination address element 404 in the message header 401.

Location Information - Format 2: Map Image File

In the case of mobile terminals which are determined to be capable of receiving messages containing image data, a map image file may be transmitted to the user terminal containing the location information the form of graphical indications on a map. Both MMS enabled mobile terminals and e-mail client terminals may be determined to be capable of receiving map images in messages. The map itself may consist entirely of still image data, for example a bit map file, or may be an interactive map file, allowing further information to be viewed by the recipient by interaction with the map on the recipient user terminal. In order to generate the map image file, the location messaging node 38 superimposes a location indicator onto a stored map section in accordance with the location coordinate data received. For this purpose, the location messaging node 38 retrieves from the map database 39 a map image section covering an area in which a location is to be indicated and superimposes graphics indicating the precise location thereon. As shown in Figure 5(B), the map image file 410 may be included in the network-originated location message 400(B) in the body portion 402 along with a text portion 408 corresponding to that received in the mobile originated message.

Location Information - Format 3: URL (WAP) Format

Location information may be given in the form of a URL, in this case constructed for use in a terminal determined to have a WAP browser capability. The URL format can contain location coordinate data, for example in the form of a Common Gateway Interface (CGI) query structure, with the location coordinate data provided as CGI query parameters. Generally, a URL may be generated during message processing by extracting location coordinate data from a received location document and constructing the URL therefrom. As shown in Figure 5(C), the generated URL is then included with the text received in the mobile originated location message to form a textual data element 412 passed in the body 402 of the location message 400(C). On receipt, the URL may be activated, for example by clicking on a hyperlink, to cause the terminal's WAP micro-browser to send a request containing the location data to the corresponding network resource.

Example 1. The following illustrates a URL generated using a representation of two coordinates of location (X and Y corresponding for example to latitude and longitude) to define a geographical location:

*wap.mylocation.info/?X=123456&Y=9876543*

The network resource is a location-enabled server such as a content server 30, 32 with the domain name "mylocation.info", ".info" being the top level domain (TLD) name. The server has the resources to understand the CGI query part of the URL (that following the domain name) and to provide location specific responses, for example in the form of a WAP card containing a map showing the location in question. It is to be understood that the domain name "mylocation.info" is used herein for illustrative purposes only, and any domain name or domain name part may be used to implement the generation of URLs according to the invention, providing the corresponding network resource is location-enabled, and capable of providing map images in response to a request message containing location coordinate data.

Example 2. An additional height dimension (A) may be added:

*wap.mylocation.info/ ?X=123456&Y=9876543&A=340*

Example 3. Associating a user-allotted name (N) with the location data may be achieved by the following representation:

*wap.mylocation.info/ ?N=MyHouse &X=123456&Y=9876543*

The server may then formulate a location-specific response containing the user-allotted name for the location.

In the above examples URL itself includes location coordinate data, however this is not necessary. In an alternative embodiment, a hyperlink, containing the network resource identifier *wap.mylocation.info,* and the location coordinate data are included as separate parts of the message in an associated manner. The location coordinate data may for example be included in the form of a single character string such as that described above, along with instructions for the user to type in the code once the network resource is accessed. Furthermore, rather than including the location coordinate data itself, the location information may be included in the form of a code used by the network resource for uniquely referencing the location coordinate data. The code may be produced by the location messaging node 38, stored and then subsequently looked up by the content server 30, 32.

Location Information - Format 4: URL (WWW) Format

This format is intended primarily for use by e-mail recipients, who tend to have access to Web browser capabilities on the recipient user terminal. This format is similar to the WAP format described above, except refers to a Web network resource. As shown in Figure 5(D), the generated URL is then included with the text received in the mobile originated location message to form a textual data element 414 passed in the body 402 of the location message 400(D). The following is an example:

*www.mylocation.info/ ?X=123456KY=9876543*

Other Location Information Formats

It will be apparent that other data formats may be used for communicating location information, whether the information is terminal-originated or network-originated.

In an alternative embodiment, location information may be sent from or to a client software object, such as a Java™ or J2ME™ (Java for mobile terminals) applet residing on the user terminal.

The location information may be transmitted as a file recognisable as such by means of a unique and registered Multi-purpose Internet Mail Extension (MIME) type.

In a yet further embodiment, the location information may be included in a document in a script format, such as Javascript™ or WMLscript™.

Furthermore, the location information may be included in the form of a selection of a plurality of the above formats.

In general, any format recognisable by a location-enabled application, whether terminal-side or network-side, may be used to identify location data as such and thus enable the user application to utilise the location information and associated data accordingly. However, preferred embodiments use a standardised location information transfer protocol format, such as an LIF Mobile Location Protocol XML document format, to achieve compatibility and interoperability.

Note that any one of the mobile originated location message format illustrated in Figures 4(A) to 4(D) may be processed by the location messaging node to generate one of the network originated location message formats illustrated in Figures 5(A) to 5(D), in accordance with the determined terminal capability. Furthermore, it should be appreciated that any combination of the location information formats described herein may be included in a location message.

Terminal Interfaces and Functions

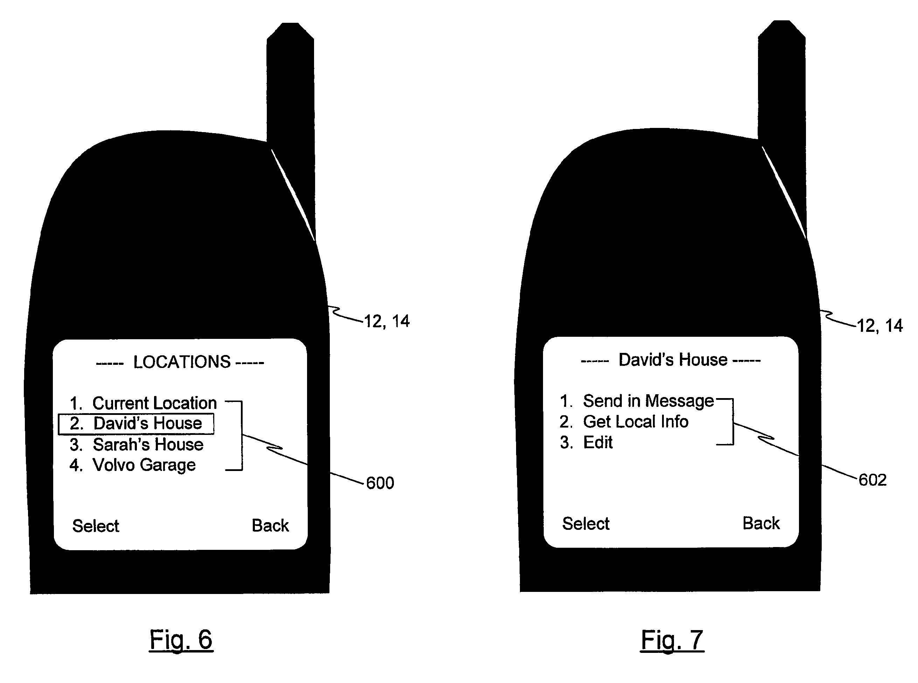

Figures 6 to 9 illustrate embodiments of the invention, in which the user interface is one of a WAP-enabled cellular mobile radio station, the example given being that of the location-enabled mobile terminals 12, 14 which are able to process location coordinate data. In addition to currently-known main menu options, such as "phonebook", "settings", "messages", etc, the terminals 12, 14 have a main menu option entitled "locations", illustrated in Figure 6.

The locations menu includes a list 600 of user-allotted names for locations stored in location records in the mobile terminal, preferably ordered by proximity to the current location of the mobile terminal. The user may navigate through the stored locations by keypad interactions, and select one of the locations from the list, in this case the location called "David'sHouse". On selection of a location from the location list menu 600, a menu in the form of location function menu 602 is presented to the user, as shown in Figure 7, allowing the user to select one or more functions to be applied in relation to the selected location.

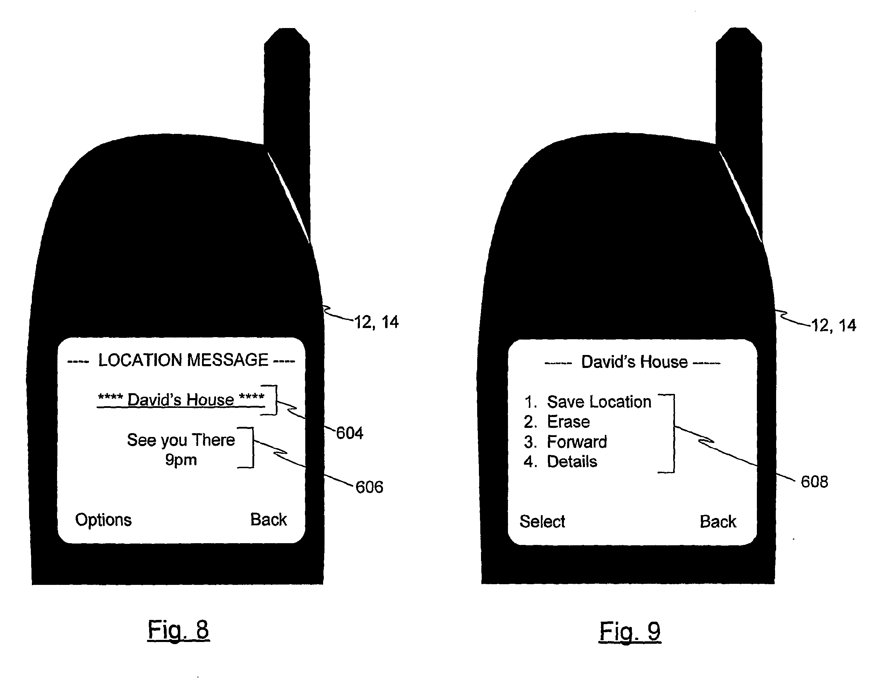

One function is to send the location in a location message, which if selected presents the user with a list of possible message recipients, from the terminal's contacts directory, from which the user may choose. As shown in Figure 8, on selecting a recipient, the display shows the location in the form of a hyperlink element 604, and the user is given the option to include a text element 606 before confirming transmission of the message by selecting a "send" option. Next, the terminal constructs the message header and body in the predetermined mobile originated location message format such as those illustrated in Figure 4(A) to 4(D), and the message is transmitted.

Note that, alternatively, the location data may be added, using a menu function such as an "add location" option, to the message during the input and editing of the contents of a normal MMS message by the user, to which function the user may return after the insertion of a location item in the text.

Figure 8 is also used to illustrate the receipt of the network originated location message, containing location information in the first location information format, at a location-enabled mobile terminal 12, 14. The user can actuate the hyperlinked location element 604 to access a location-specific menu function relating to the indicated location. Such a location-specific menu function is shown in Figure 9, including for example "save location", which enables the received location to be saved direct to the mobile terminal's location storage directory, and then to perform the other location-related functions provided on the terminal using menu functions similar to that shown in Figures 6 and 7.

Referring again to Figure 7, another option provided on a location-enabled terminal in relation to an item of locational data is an option to select a "Get Local Info" function. On selection of this function, the user terminal offers a further native menu option in the form of a service menu, relating to informational services which may be obtained in the context of the current location. On selection of at least some of these service options, the user terminal generates a service request message to request information local to the selected location. The service request message contains the location coordinate data. The service request message generated is preferably a hypermedia browser request message, such as WAP Session Protocol (WSP) Get message, containing the location data, addressed to a WAP- and location-enabled content server 30, 32. For example, if a "taxi" informational service is requested, the server may provide a list of local taxi names and associated telephone number data. If a "local map" informational service is requested, the server may provide a response containing a local map. If a "local search" option is selected, the response received is a local search form, entering one or more search parameters whereby the content server is able to conduct a search in combination with the location information.

A further menu option, accessed through location options menu 602 illustrated in Figure 7, is an edit option, whereby associated data, either already present on mobile terminal, or to be added by the user via user interface interactions, may be added to the location record as associated data.

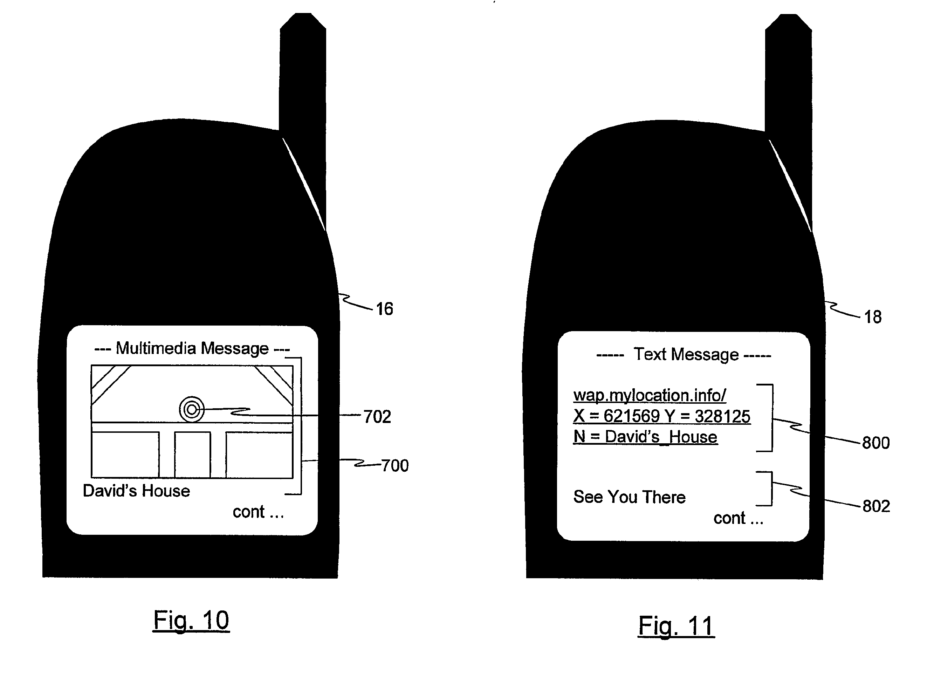

Figure 10 illustrates the presentation of a map image element 700 on the display of the MMS-capable mobile terminal 16, on receipt of a network-originated location message containing location information in the map image format. In this format, the image element 700 is in the form of a map containing an indicator graphic 702 indicating the location being communicated on a map section. The image element may also include associated data, such as the location name. The message may also include text data (not illustrated in Figure 10) as a separate part of the message.

Figure 11 illustrates the presentation of a network-originated location message in the URL (WAP) format on an SMS-capable user terminal 18. The message includes a location coordinate data element 800 in the form of a URL containing the location coordinate data and associated data in the form of the location name. The text data is included as another element 802 of the text message.

## General Remarks

Various embodiments of location-enabled terminal and network element have been described above. It is to be appreciated that any of the features which have been described in relation to one embodiment may also be used in other of the described embodiments. It is to be understood that the present invention is not limited to the described terminals and terminal applications and that in alternate embodiments of the present invention any type or combination of user terminal types, such as those listed above, running any type or combination of terminal application types, such as those listed above, may be used. The location-enabled terminal aspects of the present invention may be implemented by a software module which interoperates with one or more terminal applications, such as a hypermedia browser, a text messaging application, an e-mail application and so on, running on a given terminal type.

Storage of location data on the location-enabled user terminals, and its management thereon, is an aspect of embodiments of the invention which leads to a number of significant advantages. Namely, privacy is a real concern to many potential users of location-based services. Storage of the location data, including the current location, on the user terminal keeps the data under the direct control of the user, allowing the user to directly set privacy settings, select who is to receive the information, and allowing the user terminal to display, for example via pop-up boxes, a warning to the user whenever sensitive location data is to be sent, and to allow a user to prevent the transmission if desired.

Note in relation to the above-described embodiments that although the mobile-originated location messages are MMS messages, other types of message may also be used. For example, SMS messages may also be used in any of the embodiments described in which a textual format suffices to carry the necessary information, i.e. all of the above-described message formats other than the map image file format. Further, the mobile-originated location message is not necessarily in the form of a store-and-forward message type. Instead, the location and recipient information may be transmitted from the originating terminal to the location messaging node by other mechanisms, such as by means of a client-server request message, for example an HTTP or WSP POST message, containing the appropriate data.

Note that the invention is not only applicable in relation to messages originally transmitted from a mobile terminal. In alternative embodiments, network-originated MMS messages having location information formatted in accordance with determined recipient terminal capabilities are generated on the basis of location information not originally received in response to a mobile originated message. For example, such a network-originated message may be of a promotional type detailing a location related to the contents of the promotional message.

Note, in case the location server does not hold location data of sufficient accuracy, measured in relation to a predetermined threshold set in the location service node, a location message response may initially be sent to the originating mobile terminal, containing a map image format showing the area in which the terminal is coarsely known to be present, allowing the mobile terminal user to indicate on the map more precisely where they are located, and returning the appropriate selection data to the location messaging node to allow the location messaging node to transmit location information of sufficient detail to a recipient.

Note that the invention extends to software for adapting a user terminal to function in the manner described above. Note finally that the above embodiments are to be understood as illustrative examples of the invention. Furthermore, equivalents and modifications not described above may also be employed without departing from the scope of the invention, which is defined in the accompanying claims.

**Claims**

1. A method of operating a location messaging system enabling the communication of geographical location information using messaging sent from a first user terminal (12; 14) to a second user terminal (16; 18) via a data communications network, said method comprising:

    a) receiving, at a location messaging node (38) in the network, a first message transmitted from the first user terminal; said first message comprising a recipient identifier for identifying the second terminal;
    b) receiving location information, relating to the first user terminal, in a first format;
    c) processing the location information to generate location information in a second, different, format which is compatible with a processing capability of the second user terminal; and
    d) using said recipient identifier, transmitting a second message for reception at the second user terminal, the second message containing the location information in the second format.

2. A method according to claim 1, comprising:

    determining a processing capability of the second user terminal,

    wherein the second location information format is selected from a plurality of predetermined location information formats in accordance with the determined processing capability.

3. A method according to claim 2, comprising determining the processing capability from the received recipient identifier.

4. A method according to claim 2 or 3, comprising determining the processing capability by lookup from a user database (37).

5. A method according to any preceding claim, wherein said location information format or formats comprise a format

**EP 1 488 658 B1**

specifying a location in the form of location coordinate data.

6. A method according to any preceding claim, wherein said location information format or formats comprise a mark-up language format, such as an XML format.

7. A method according to any preceding claim, wherein said location information format or formats comprise a format including a network resource identifier comprising at least one location identifier element.

8. A method according to any preceding claim, wherein said location information format or formats comprise a format including a map image element.

9. A method according to any preceding claim, wherein the location information in the first format is received from the first user terminal (12).

10. A method according to claim 9, wherein the location information in the first format is received in the first message.

11. A method according to any of claims 1 to 8, wherein the location information in the first format is retrieved from a network server (40).

12. A method according to any preceding claim, wherein the recipient identifier is sent from the first user terminal in a message of a store-and-forward type.

13. A method according to any preceding claim, wherein the location information is transmitted in a message of a store-and-forward type.

14. A method according to any preceding claim, wherein the recipient identifier comprises a telephone directory number.

15. A method according to any preceding claim, wherein the recipient identifier comprises an email address.

16. A location messaging system enabling the communication of geographical location information using messaging sent from a first user terminal (12; 14) to a second user terminal (16; 18) via a data communications network, said system comprising:

   a) receiving means for, at a location messaging node (38) in the network, receiving a first message transmitted from the first user terminal; said first message comprising a recipient identifier for identifying the second terminal;
   b) receiving means for receiving location information, relating to the first user terminal, in a first format;
   c) processing means for processing the location information to generate location information in a second, different, format which is compatible with a processing capability of the second user terminal; and
   d) transmitting means for, using said recipient identifier, transmitting a second message for reception at the second user terminal, the second message containing the location information in the second format.

17. A location messaging system according to claim 16, comprising:

   means for determining a processing capability of the second user terminal,

   wherein the second location information format is selected from a plurality of predetermined location information formats in accordance with the determined processing capability.

18. A location messaging system according to claim 17, comprising means for determining the processing capability from the received recipient identifier.

19. A location messaging system according to claim 17 or 18, comprising means for determining the processing capability by lookup from a user database (37).

20. A location messaging system according to any of claims 16 to 19, wherein said location information format or formats comprise a format specifying a location in the form of location coordinate data.

21. A location messaging system according to any of claims 16 to 20, wherein said location information format or formats

**12**

comprise a mark-up language format, such as an XML format.

22. A location messaging system according to any of claims 16 to 21, wherein said location information format or formats comprise a format including a network resource identifier comprising at least one location identifier element.

23. A location messaging system according to any of claims 16 to 22, wherein said location information format or formats comprise a format including a map image element.

24. A location messaging system according to any of claims 16 to 23, wherein the system is adapted to receive the location information in the first format from the first user terminal (12).

25. A location messaging system according to claim 24, wherein the system is adapted to receive the location information in the first format in the first message.

26. A location messaging system according to any of claims 16 to 23, wherein the system is adapted to receive the location information in the first format from a network server (40).

27. A location messaging system according to any of claims 16 to 26, wherein the first message is a message of a store-and-forward type.

28. A location messaging system according to any of claims 16 to 27, wherein the second message is a message of a store-and-forward type.

**Patentansprüche**

1. Verfahren zum Betreiben eines Positions-Mitteilungsübermittlungssystems, welches eine Kommunikation von geografischen Positionsinformationen unter Verwendung einer Mitteilungsübermittlung ermöglicht, welche von einem ersten Anwender-Endgerät (12; 14) zu einem zweiten Anwender-Endgerät (16; 18) über ein Datenkommunikationsnetzwerk gesendet wird, mit den Schritten:

   a) Empfangen einer ersten von dem ersten Anwender-Endgerät gesendeten Mitteilung an einem Positions-Mitteilungsübermittlungsknoten (38) in dem Netzwerk, wobei die erste Mitteilung eine Empfängerkennung zur Identifizierung des zweiten Endgerätes aufweist,
   b) Empfangen von Positionsinformationen, welche sich auf das erste Anwender-Endgerät beziehen, in einem ersten Format,
   c) Verarbeiten der Positionsinformationen zum Erzeugen von Positionsinformationen in einem zweiten unterschiedlichen Format, welches kompatibel mit den Verarbeitungsfähigkeiten des zweiten Anwender-Endgerätes ist, und
   d) Übertragen einer zweiten Mitteilung für den Empfang an dem zweiten Anwender-Endgerät unter Verwendung der Empfängerkennung, wobei die zweite Mitteilung die Positionsinformationen in dem zweiten Format aufweist.

2. Verfahren nach Anspruch 1, mit dem Schritt:

   Bestimmen einer Verarbeitungsfähigkeit des zweiten Anwender-Endgerätes, wobei das zweite Positionsinformationsformat aus einer Vielzahl von vorbestimmten Positionsinformationsformaten gemäß der bestimmten Verarbeitungsfähigkeit ausgewählt wird.

3. Verfahren nach Anspruch 2, mit dem Schritt:

   Bestimmen der Verarbeitungsfähigkeit aus der empfangenen Empfängerkennung.

4. Verfahren nach Anspruch 2 oder 3, mit dem Schritt:

   Bestimmen der Verarbeitungsfähigkeit durch Nachschlagen in einer Anwenderdatenbank (37).

5. Verfahren nach einem der vorherigen Ansprüche, wobei das Positionsinformationsformat oder -formate ein Format aufweist, welches eine Position in Form von Positionskoordinatendaten spezifiziert.

6. Verfahren nach einem der vorherigen Ansprüche, wobei das Positionsinformationsformat oder -formate ein Mark-up Sprachformat wie beispielsweise ein XML-Format aufweist.

7. Verfahren nach einem der vorherigen Ansprüche, wobei das Positionsinformationsformat oder -formate ein Format aufweist, welches eine Netzwerkresourcen-Kennung mit mindestens einem Positionskennungselement aufweist.

8. Verfahren nach einem der vorherigen Ansprüche, wobei das Positionsinformationsformat oder -formate ein Format mit einem Kartenbildelement aufweist.

9. Verfahren nach einem der vorherigen Ansprüche, wobei die Positionsinformation in dem ersten Format von dem ersten Anwender-Endgerät (12) empfangen wird.

10. Verfahren nach Anspruch 9, wobei die Positionsinformation in dem ersten Format in der ersten Mitteilung empfangen wird.

11. Verfahren nach einem der Ansprüche 1 bis 8, wobei die Positionsinformation in dem ersten Format von einem Netzwerkserver (40) abgerufen wird.

12. Verfahren nach einem der vorherigen Ansprüche, wobei die Empfängerkennung von dem ersten Anwender-Endgerät in einer Mitteilung einer Store-and-Forward-Art gesendet wird.

13. Verfahren nach einem der vorherigen Ansprüche, wobei die Positionsinformationen in einer Mitteilung einer Store-and-Forward-Art übertragen werden.

14. Verfahren nach einem der vorherigen Ansprüche, wobei die Empfängerkennung eine Telefonbuchnummer aufweist.

15. Verfahren nach einem der vorherigen Ansprüche, wobei die Empfängerkennung eine E-Mail-Adresse aufweist.

16. Positionsmitteilungsübermittlungssystem zum Ermöglichen einer Kommunikation von geografischen Positionsinformationen unter Verwendung einer Mitteilungsübermittlung, welche von einem ersten Anwender-Endgerät (12; 14) an ein zweites Anwender-Endgerät (16; 18) über ein Datenkommunikationsnetzwerk gesendet wird, mit:

   a) einem Empfangsmittel zum Empfangen einer ersten von dem ersten Anwender-Endgerät gesendeten Mitteilung an einem Positions-Mitteilungsübermittlungsknoten (38) in dem Netzwerk, wobei die erste Mitteilung eine Empfängerkennung zur Identifizierung des zweiten Endgerätes aufweist,
   b) Empfangsmittel zum Empfangen von Positionsinformationen, welche sich auf das erste Anwenderendgerät beziehen, in einem ersten Format,
   c) Verarbeitungsmittel zum Verarbeiten der Positionsinformationen zum Erzeugen von Positionsinformationen in einem zweiten unterschiedlichen Format, welches kompatibel mit den Verarbeitungsfähigkeiten des zweiten Anwender-Endgerätes ist, und
   d) Übertragungsmittel zum Übertragen einer zweiten Mitteilung für den Empfang an dem zweiten Anwender-Endgerät unter Verwendung der Empfängerkennung, wobei die zweite Mitteilung die Positionsinformationen in dem zweiten Format aufweist.

17. Positionsmitteilungsübermittlungssystem nach Anspruch 16, mit:

   einem Mittel zum Bestimmen einer Verarbeitungsfähigkeit des zweiten Anwender-Endgerätes, wobei das zweite Positionsinformationsformat aus einer Vielzahl von vorbestimmten Positionsinformationsformaten gemäß der bestimmten Verarbeitungsfähigkeit ausgewählt wird.

18. Positionsmitteilungsübermittlungssystem nach Anspruch 17, mit:

   einem Mittel zum Bestimmen der Verarbeitungsfähigkeit aus der empfangenen Empfängerkennung.

19. Positionsmitteilungsübermittlungssystem nach Anspruch 17 oder 18, mit:

   einem Mittel zum Bestimmen der Verarbeitungsfähigkeit durch Nachschlagen in einer Anwenderdatenbank (37).

20. Positionsmitteilungsübermittlungssystem nach einem der Ansprüche 16 bis 19, wobei das Positionsinformationsformat oder -formate ein Format aufweist, welches eine Position in Form von Positionskoordinatendaten spezifiziert.

21. Positionsmitteilungsübermittlungssystem nach einem der Ansprüche 16 bis 20, wobei das Positionsinformationsformat oder -formate ein Mark-up Sprachformat wie beispielsweise ein XML-Format aufweist.

22. Positionsmitteilungsübermittlungssystem nach einem der Ansprüche 16 bis 21, wobei das Positionsinformationsformat oder -formate ein Format aufweist, welches eine Netzwerkresourcen-Kennung mit mindestens einem Positionskennungselement aufweist.

23. Positionsmitteilungsübermittlungssystem nach einem der Ansprüche 16 bis 22, wobei das Positionsinformationsformat oder -formate ein Format mit einem Kartenbildelement aufweist.

24. Positionsmitteilungsübermittlungssystem nach einem der Ansprüche 16 bis 23, wobei das System dazu geeignet ist, die Positionsinformation in dem ersten Format von dem ersten Anwender-Endgerät (12) zu empfangen.

25. Positionsmitteilungsübermittlungssystem nach Anspruch 24, wobei das System dazu geeignet ist, die Positionsinformation in dem ersten Format in der ersten Mitteilung zu empfangen.

26. Positionsmitteilungsübermittlungssystem nach einem der Ansprüche 16 bis 23, wobei das System dazu geeignet ist, die Positionsinformation in dem ersten Format von einem Netzwerkserver (40) zu empfangen.

27. Positionsmitteilungsübermittlungssystem nach einem der Ansprüche 16 bis 26, wobei die erste Mitteilung eine Mitteilung der Store-and-Forward-Art darstellt.

28. Positionsmitteilungsübermittlungssystem nach einem der Ansprüche 16 bis 27, wobei die zweite Mitteilung eine Mitteilung einer Store-and-Forward-Art darstellt.

**Revendications**

1. Procédé d'exploitation d'un système de messagerie de localisation permettant la communication d'informations de localisation géographique en utilisant une messagerie envoyée à partir d'un premier terminal d'utilisateur (12, 14) à un second terminal d'utilisateur (16, 18) via un réseau de communication de données, ledit procédé comprenant :

   a) la réception, sur un noeud de messagerie de localisation (38) dans le réseau, d'un premier message émis par le premier terminal d'utilisateur, ledit premier message comprenant un identifieur destinataire pour identifier le second terminal ;
   b) la réception d'informations de localisation, liées au premier terminal d'utilisateur, dans un premier format ;
   c) le traitement des informations de localisation pour générer des informations de localisation dans un second format différent qui est compatible avec une capacité de traitement du second terminal d'utilisateur ; et
   d) l'utilisation dudit identifieur de destinataire, émettant un second message pour la réception sur le second terminal d'utilisateur, le second message contenant des informations de localisation dans le second format.

2. Procédé selon la revendication 1, comprenant :

   la détermination d'une capacité de traitement du second terminal d'utilisateur,

   dans lequel le second format d'informations de localisation est sélectionné à partir d'une pluralité de formats d'informations de localisation prédéterminés selon la capacité de traitement déterminée.

3. Procédé selon la revendication 2, comprenant la détermination de la capacité de traitement de l'identifieur de destinataire reçu.

4. Procédé selon la revendication 2 ou 3, comprenant la détermination de la capacité de traitement par la consultation d'une base de données d'utilisateur (37).

5. Procédé selon une revendication précédente quelconque, dans lequel ledit format ou lesdits formats d'informations de localisation comprennent un format spécifiant un emplacement sous la forme de données de coordonnées de localisation.

6. Procédé selon une revendication précédente quelconque, dans lequel ledit format ou lesdits formats d'informations de localisation comprennent un format de langage de balisage, tel qu'un format XML.

7. Procédé selon une revendication précédente quelconque, dans lequel ledit format ou lesdits formats d'informations de localisation comprennent un format comprenant un identifieur de ressource de réseau comprenant au moins un élément identifieur de localisation.

8. Procédé selon une revendication précédente quelconque, dans lequel ledit format ou lesdits formats d'informations de localisation comprennent un format comprenant un élément d'image de cartographie.

9. Procédé selon une revendication précédente quelconque, dans lequel les informations de localisation dans le premier format sont reçues du premier terminal d'utilisateur (12).

10. Procédé selon la revendication 9, dans lequel les informations de localisation dans le premier format sont reçues dans le premier message.

11. Procédé selon l'une quelconque des revendications 1 à 8, dans lequel les informations de localisation dans le premier format sont récupérées à partir d'un serveur de réseau (40).

12. Procédé selon une revendication précédente quelconque, dans lequel l'identifieur de destinataire est envoyé par le premier terminal d'utilisateur dans un message d'un type stockage et retransmission.

13. Procédé selon une revendication précédente quelconque, dans lequel les informations de localisation sont transmises dans un message d'un type stockage et retransmission.

14. Procédé selon une revendication précédente quelconque, dans lequel l'identifieur de destinataire comprend un numéro de répertoire téléphonique.

15. Procédé selon une revendication précédente quelconque, dans lequel l'identifieur de destinataire comprend une adresse email.

16. Système de messagerie de localisation permettant la communication d'informations de localisation géographique en utilisant une messagerie envoyée d'un premier terminal d'utilisateur (12, 14) à un second terminal d'utilisateur (16, 18) via un réseau de communication de données, ledit système comprenant :

   a) un moyen de réception pour, sur le noeud de messagerie de localisation (18) dans le réseau, recevoir un premier message transmis par le premier terminal d'utilisateur, ledit premier message comprenant un identifieur de destinataire pour identifier le second terminal ;
   b) un moyen de réception pour recevoir des informations de localisation, liées au premier terminal d'utilisateur, dans un premier format ;
   c) un moyen de traitement pour traiter les informations de localisation pour générer des informations de localisation dans un second format différent qui est compatible avec une capacité de traitement du second terminal d'utilisateur ; et
   d) un moyen d'émission pour, en utilisant ledit identifieur de destinataire, émettre un second message pour la réception sur le second terminal d'utilisateur, le second message contenant les informations de localisation dans le second format.

17. Système de messagerie de localisation selon la revendication 16, comprenant :

   un moyen pour déterminer une capacité de traitement du second terminal d'utilisateur,

   dans lequel le second format d'informations de localisation est sélectionné à partir d'une pluralité de formats d'informations de localisation prédéterminés selon la capacité de traitement déterminée.

18. Système de messagerie de localisation selon la revendication 17, comprenant un moyen pour déterminer la capacité de traitement de l'identifieur de destinataire reçu.

19. Système de messagerie de localisation selon la revendication 17 ou 18, comprenant un moyen pour déterminer la capacité de traitement par la consultation d'une base de données d'utilisateur (37).

20. Système de messagerie de localisation selon l'une quelconque des revendications 16 à 19, dans lequel ledit format ou lesdits formats d'informations de localisation comprennent un format spécifiant un emplacement sous la forme de données de coordonnées de localisation.

21. Système de messagerie de localisation selon l'une quelconque des revendications 16 à 20, dans lequel ledit format ou lesdits formats d'informations de localisation comprennent un format de langage de balisage, tel qu'un format XML.

22. Système de messagerie de localisation selon l'une quelconque des revendications 16 à 21, dans lequel ledit format ou lesdits formats d'informations de localisation comprennent un format comprenant un identifieur de ressource de réseau comprenant au moins un élément identifieur de localisation.

23. Système de messagerie de localisation selon l'une quelconque des revendications 16 à 22, dans lequel ledit format ou lesdits formats d'informations de localisation comprennent un format comprenant un élément d'image de carte.

24. Système de messagerie de localisation selon l'une quelconque des revendications 16 à 23, dans lequel le système est adapté pour recevoir les informations de localisation dans le premier format du premier terminal d'utilisateur (12).

25. Système de messagerie de localisation selon la revendication 24, dans lequel le système est adapté pour recevoir des informations de localisation dans le premier format dans le premier message.

26. Système de messagerie de localisation selon l'une quelconque des revendications 16 à 23, dans lequel le système est adapté pour recevoir les informations de localisation dans le premier format d'un serveur de réseau (40).

27. Système de messagerie de localisation selon l'une quelconque des revendications 16 à 26, dans lequel le premier message est un message du type stockage et retransmission.

28. Système de messagerie de localisation selon l'une quelconque des revendications 16 à 27, dans lequel le second message est un message du type stockage et retransmission.

Fig. 1

EP 1 488 658 B1

Fig. 2

EP 1 488 658 B1

| CURRENT LOCATION | ASSOCIATED DATA | 202 |
|---|---|---|
| LOCATION 1 | ASSOCIATED DATA | 204 |
| LOCATION 2 | ASSOCIATED DATA | 206 |
| LOCATION 3 | ASSOCIATED DATA | 208 |
| LOCATION 4 | ASSOCIATED DATA | 210 |
| LOCATION 5 | ASSOCIATED DATA | 212 |
| LOCATION 6 | ASSOCIATED DATA | 214 |
| LOCATION 7 | ASSOCIATED DATA | 216 |
| LOCATION 8 | ASSOCIATED DATA | 218 |
| LOCATION 9 | ASSOCIATED DATA | 220 |
| LOCATION 10 | ASSOCIATED DATA | 222 |
| 224 | 226 | |

<u>Fig. 3</u>

EP 1 488 658 B1

301 302

300(A)

| ADDRESS (LMN) | . . . | ADDRESS (RECIPIENT) | LOCATION DOCUMENT | TEXT |

304 **Fig. 4(A)** 306 308 310

301 302

300(B)

| ADDRESS (RECIPIENT) | FLAG | . . . | LOCATION DOCUMENT | TEXT |

304 312 **Fig. 4(B)** 308 310

301 302

300(C)

| ADDRESS (LMN) | . . . | ADDRESS (RECIPIENT) | TEXT |

304 **Fig. 4(C)** 306 310

301 302

300(D)

| ADDRESS (RECIPIENT) | FLAG | . . . | TEXT |

304 312 **Fig. 4(D)** 310

401    402

400(A)

ADDRESS
(RECIPIENT)    . . .    LOCATION
DOCUMENT    TEXT

404    **Fig. 5(A)**    406    408

401    402

400(B)

ADDRESS
(RECIPIENT)    . . .    MAP IMAGE    TEXT

404    **Fig. 5(B)**    410    408

401    402

400(C)

ADDRESS
(RECIPIENT)    . . .    TEXT + URL (WAP)

404    **Fig. 5(C)**    412

401    402

400(D)

ADDRESS
(RECIPIENT)    . . .    TEXT + URL (WEB)

404    **Fig. 5(D)**    414

----- David's House -----

1. Send in Message
2. Get Local Info
3. Edit

Select                    Back

_Fig. 7_

12, 14

602

----- LOCATIONS -----

1. Current Location
2. David's House
3. Sarah's House
4. Volvo Garage

Select                    Back

_Fig. 6_

12, 14

600

---- LOCATION MESSAGE ----

\*\*\*\* David's House \*\*\*\*

604

See you There
9pm

606

Options                    Back

12, 14

**Fig. 8**

---- David's House ----

1. Save Location
2. Erase
3. Forward
4. Details

608

Select                    Back

12, 14

**Fig. 9**

EP 1 488 658 B1

--- Multimedia Message ---

David's House

702

700

cont ...

## Fig. 10

----- Text Message -----

wap.mylocation.info/
X = 621569 Y = 328125
N = David's_House

800

See You There

cont ...

802

## Fig. 11

16

18

**EP 1 488 658 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0160100 A